# EUROPEAN PATENT APPLICATION

(11) **EP 3 385 167 A1**
(43) Date of publication of application: **10.10.2018**
(21) Application number: 17164649.0
(22) Date of filing: 03.04.2017
(51) Int. Cl.: B64D 11/06

(54) **A SEAT FOR A VEHICLE**

(71) Applicant: Adient US LLC, Plymouth MI 48170 (US)
(72) Inventor: WEINGART, Andreas, 67700 Niederkirchen (DE)
(74) Representative: Finger, Catrin

(57) **Abstract**

The present disclosure relates to a seat (1) for a vehicle, in particular for an airplane, comprising:
- a seat pan (2) having a seat pan frame (5.1),
- a backrest (3) having a backrest frame (5.2) which is pivotably mounted to a back seat pan side of the seat pan frame (5.1) at a backrest pivot fitting (PF1) having a backrest pivot axis (PA1),
- a leg rest (4) having a leg rest frame (5.3) which is pivotably mounted to a front seat pan side of the seat pan frame (5.1) at a leg rest pivot fitting (PF2) having a leg rest pivot axis (PA2),
wherein the seat pan (2), the backrest (3) and the leg rest (4) are articulated with respect to each other such that the seat (1) is positionable into at least one of a taxi, take-off and landing position (P1), a comfort position (P2) and a sleeping position (P3),
wherein an upholstery (8) is provided that is arranged on the seat pan (2), the backrest (3) and the leg rest (4) and
wherein the upholstery (8) is configured to be pulled at least partially into the backrest pivot axis (PA1) between the seat pan (2) and the backrest (3) while pivoting the backrest (3) into an upward direction to move the seat (1) from the comfort position (P2) or the sleeping position (P3) into the taxi, take-off and landing position (P1).

## Description

### FIELD OF INVENTION

The present disclosure relates to a seat for a vehicle, in particular for an airplane.

### DESCRIPTION OF THE RELATED ART

WO 2006/119809 A1 describes a vehicle seat with seat part and a backrest, in particular for a motor vehicle. The seat has plastic spring elements and is provided with foam padding on the side on which the vehicle occupant sits. The at least one shell structure is arranged on metal frame parts of the seat part and/or back rest.

Furthermore, DE 10 2006 057 257 A1 describes an incontinence cover for seats, including vehicle seats, having an absorbent layer that can be removed for washing.

### SUMMARY OF THE INVENTION

It is an object of the present disclosure to provide an improved seat for a vehicle, in particular for an airplane.

The object is achieved by a seat according to claim 1.

Preferred embodiments of the disclosure are given in the dependent claims.

The present disclosure provides a seat for a vehicle, in particular for an airplane, wherein the seat comprises a seat pan, a backrest and a leg rest. The seat pan has a seat pan frame and the backrest has a backrest frame, which is pivotably mounted to a back seat pan side of the seat pan frame at a backrest pivot fitting having a backrest pivot axis. The leg rest has a leg rest frame which is pivotably mounted to a front seat pan side of the seat pan frame at a leg rest pivot fitting having a leg rest pivot axis. The seat pan, the backrest and the leg rest are articulated with respect to each other such that the seat is positionable into at least one of a taxi, take-off and landing position, a comfort position and a sleeping position.

The taxi, take-off and landing position (also known as TTL position) of the seat is a position in which the backrest is in a substantial upright position with respect to the seat pan. The passenger needs to sit in an upright position. The comfort position of the seat is a substantial inclined position in which the leg rest has moved in the upward direction and the backrest has moved in a downward direction with respect to the TTL position. The leg rest, the seat pan and the backrest are respectively inclined to each other and the passenger is allowed to sit in a relaxed position. The sleeping position of the seat is a position in which the backrest, the seat pan and the leg rest substantially are in a straight line, more over parallel to each other. With other words: The backrest, the seat pan and the leg rest are not inclined to each other and the passenger may be allowed to have a natural sleeping posture.

The seat is further provided with an upholstery that is arranged on the seat pan, the backrest and the leg rest, wherein the upholstery is configured to be pulled at least partially into the backrest pivot axis between the seat pan and the backrest while pivoting the backrest into an upward direction to move the seat from the comfort position or the sleeping position into the taxi, take-off and landing position.

The seat provides a longer service life of the upholstery. This is due to the pulling of the upholstery into the backrest pivot axis while moving the seat into the TTL position, because this prevents the upholstery from buckling in the area between the seat pan and the backrest.

According to an aspect of the disclosure, a pull element is provided for pulling the upholstery at least partially into the backrest pivot axis. The pull element provides a force acting softly on the upholstery while moving the seat into the TTL position.

The pull element may be configured as a flexible or non-flexible element. In particular, the pull element is made from an elastic material such as an elastomer, rubber, textile or spring steel. The pull element may be configured as an elastic band. This allows transmitting the force from the movement of the seat into the TTL position to the upholstery. Currently it is

According to a further aspect of the disclosure, the upholstery comprises at least a seat pan upholstery part, a backrest upholstery part, a leg rest upholstery part or and a trim cover. The seat pan upholstery part, a backrest upholstery part and the leg rest upholstery part may be respectively made of foam, e. g. of polyurethane foam. This comforts a sitting for the passenger on the seat and may be absorb impacts. The trim cover may be made from a textile.

The trim cover may be configured to jointly cover the seat pan upholstery part, the backrest upholstery part and the leg rest upholstery part. This gives the impression of one-piece upholstery, which looks more comfortable and can be manufactured and cleaned in an easy kind of way.

In an exemplary embodiment, the seat pan upholstery part and the backrest upholstery part are configured as one-piece element to which the leg rest upholstery part is detachably connectable. This allows an easy manufacturing of the foam parts of the upholstery. The leg rest upholstery part may be loosely connected to the one-piece foam element by the trim cover, which jointly covers both the leg rest upholstery part and the one-piece foam element. Alternatively, the leg rest upholstery part may be attached to the one-piece foam element via an additional textile stripe, which is sewed both the leg rest upholstery part and the one-piece foam element. Latter strengthens the connection between the leg rest upholstery part and the one-piece foam element and enables a bending in an acute angle.

Furthermore, the trim cover may be attached at least to one of the seat pan frame or the backrest frame. Preferably, the trim cover is attached to both of the seat pan frame or the backrest frame in order to enable a non-slipping fitting of the upholstery on the seat. The trim cover may be attached to one of the seat pan frame or the backrest frame for example via hook-and-loop fasteners. The trim cover may be additionally attached to the leg rest frame.

According to a further aspect of the disclosure, the trim cover is provided with at least one connecting element, e. g. a connecting stripe, in a bending area between a trim cover part covering the seat pan upholstery part and a further trim cover part covering the backrest pan upholstery part. The connecting element may be a textile stripe that enables an attachment of the pull element to the upholstery, in particular to the trim cover.

In an exemplary embodiment, the at least one connecting element is sewed into the bending area of the trim cover. The sewing allows a durable fixing of the connecting element to the trim cover. This may be from importance for connecting the pull element to the upholstery. For example, one end of the pull element is connected to the trim cover via the at least one connecting element.

The one end of the pull element may be connected to the at least one connecting element via a zipper connection or similar suitable connections. This enables a detachable fixing of the pull element to the trim cover such that replacing the pull element is easily practicable.

Another end of the pull element may be fixedly connected to the backrest frame. The pull element is thus allowed to transmit a force from a movement of the backrest in the upward direction to the trim cover in order to pull the trim cover into the backrest pivot axis between the seat pan and the backrest.

Furthermore, the pull element may be guided about a circumference section of the backrest pivot fitting such that the end of the pull element connected to the connecting strip is pulled into the backrest pivot axis by the backrest movement in the upward direction when the seat is moved into the taxi, take-off and landing position. The pull element is thus biased when the backrest moves in the upward direction and relaxed when the backrest moves in the downward direction, e. g. for moving the seat into the sleeping position.

In a further aspect of the disclosure, the upholstery comprises at least one recess arranged between the seat pan upholstery part and the backrest upholstery part. The recess may be configured as cavity or cut out that inserted into a lower foam layer and may be covered by a top foam layer. The foam top layer me be glued to the lower foam layer comprising the at least one recess. The upholstery may comprise more than one recess. Preferably, the upholstery comprises recesses in further bending area, e. g. in a head rest bending area, a leg rest bending area etc. The recesses are adapted to prepare softer areas within the foam part of the upholstery to make it easily bendable in these areas. Furthermore, the recesses individually support different areas of a passenger's body, e. g. a hip and/or shoulder, whereby the spine may be in a neutral position while the passenger lays on his back or in his side.

### BRIEF DESCRIPTION OF THE DRAWINGS

The present invention will become more fully understood from the detailed description given herein below and the accompanying drawings which are given by way of illustration only, and thus, are not limitative of the present invention, and wherein:
- Figure 1: is a side view of an exemplary embodiment of a seat for a vehicle, in particular for an aircraft, with the seat being shown in a taxi, take-off, and landing position,
- Figure 2: is a side view of an exemplary embodiment of a seat for a vehicle, in particular for an aircraft, with the seat being shown in a comfort position,
- Figure 3: is a side view of an exemplary embodiment of a seat for a vehicle, in particular for an aircraft, with the seat being shown in a sleeping position,
- Figure 4: is a perspective view of an exemplary embodiment of a leg rest upholstery part for a seat upholstery and
- Figure 5: is a perspective view of an exemplary embodiment of a one piece foam element comprising a backrest upholstery part and a seat pan upholstery part.

Corresponding parts are marked with the same reference symbols in all figures.

### DETAILED DESCRIPTION OF PREFERRED EMBODIMENTS

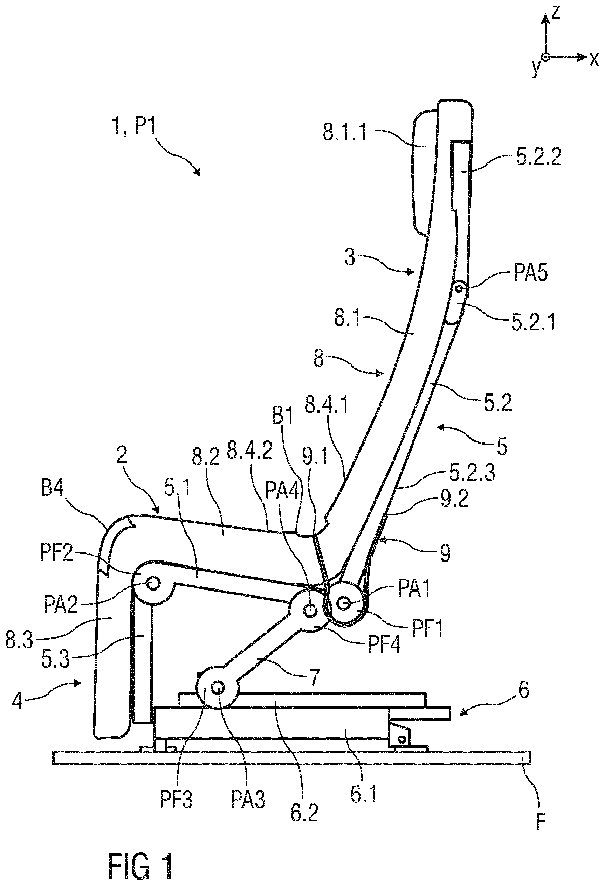

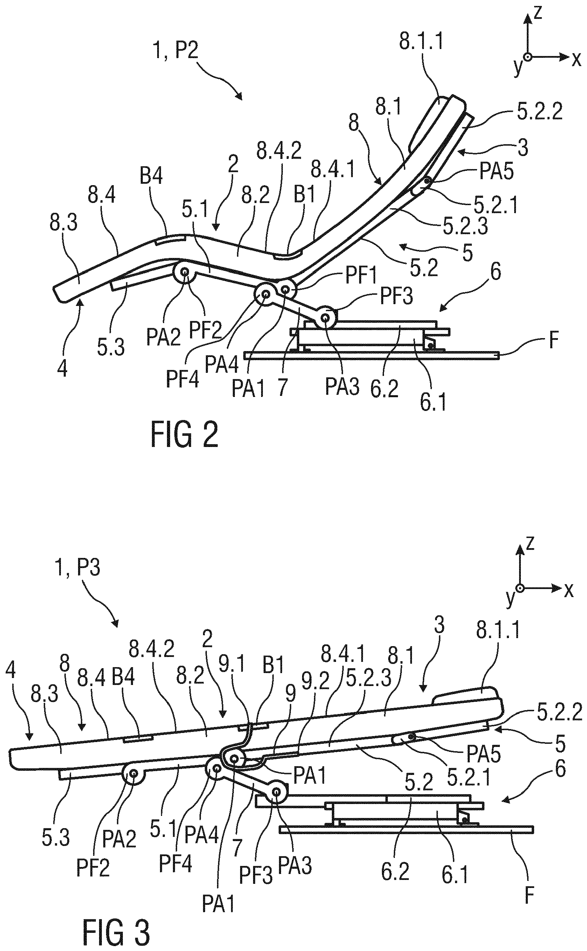

**The** **figures 1 to 3** respectively show an exemplary embodiment of a seat 1 for a not further illustrated vehicle, in particular for an aircraft, in a side view. Figure 1 shows the seat 1 in a taxi, take-off, and landing position P1, which is hereinafter referred to as TTL position P1. Figure 2 shows the seat 1 in a comfort position P2. Figure 3 shows the seat 1 in a sleeping position P3.

For a better understanding of subsequent descriptions of the seat 1, a coordinate system is shown in figures 1 to 3. The coordinate system comprises a longitudinal axis x, a transverse axis y and a vertical axis z in relation to an interior space of the vehicle, e. g. the aircraft cabin, in which the seat 1 is located.

The seat 1 generally comprises a seat pan 2, a backrest 3 and a leg rest 4. In more detail, the seat 1 comprises a seat support structure 5, i. e. a seat frame, which is connected to a base structure 6. The seat support structure 5 provides a seat pan frame 5.1 for the seat pan 2 with two lateral seat pan sides, a front seat pan side and a back seat pan side (not shown). The seat support structure 5 further provides a backrest frame 5.2 for the backrest 3 which is pivotably mounted to the back seat pan side defining a a backrest pivot axis PA1. That means the backrest 3 is pivotable with respect to the seat pan 2 about the backrest pivot axis PA1, wherein the backrest pivot axis PA1 is parallel to the transverse axis y.

The seat support structure 5 further comprises a leg rest frame 5.3 for the leg rest 4, wherein the leg rest frame 5.3 is pivotably mounted to the front seat pan side at a leg rest pivot axis PA2. That means the leg rest 4 is pivotable with respect to the seat pan 2 about the leg rest pivot axis PA2, wherein the leg rest pivot axis PA2 runs parallel to the transverse axis y. The leg rest 4 may be adapted as a calf rest.

Additionally, the backrest frame 5.2 may be provided with a shoulder support 5.2.1 and a headrest frame 5.2.2, which is pivotably mounted to a lower backrest frame 5.2.3 at a shoulder support pivot axis PA5.

Continuously, the backrest frame 5.2 is pivotably connected to the seat pan frame 5.1 by at least one of a backrest pivot fitting PF1 in the backrest pivot axis PA1. The leg rest frame 5.3 is pivotably connected to the seat pan frame 5.1 by at least one of a leg rest pivot fitting PF2 in the leg rest pivot axis PA2. In particular, each of the pivot fittings PF1, PF2 is provided by a recliner mechanism and thereby comprising recliner fittings.

The seat pan frame 5.1 is connected to the base structure 6 by two parallel arranged levers 7, wherein only one of the levers 7 is shown in figure 1. In particular, the levers 7 provide a swing arm mechanism.

The base structure 6 provides a track mechanism for length adjustment of the seat 1. Therefore, the track mechanism provides a length adjuster for the seat 1. The track mechanism provides a lower track 6.1 fixedly coupled to an aircraft floor F and an upper track 6.2 which is slidable coupled to the lower track 6.1 for a sliding movement into a longitudinal direction of the aircraft parallel to the longitudinal axis x.

As illustrated in figures 1 to 3, the seat pan frame 5.1 is connected to the upper track 6.2 in a front region of the upper track 6.2. In particular, the seat pan frame 5.1 is pivotably connected to the upper track 6.2 on each of the two lateral seat pan sides. Therefore, the seat pan 2, the backrest 3 and the leg rest 4 are articulated with respect to each other and with respect to the base structure 6 by each of the levers 7.

The levers 7 respectively comprise two pivot axes PA3, PA4 providing a first lever pivot axis PA3 and a second lever pivot axis PA4 whose are both parallel to the transverse axis y. The lever pivot axes PA3, PA4 are provided by pivot fittings PF3, PF4 that comprise a recliner mechanism respectively. For example, the recliner mechanism is configured as a rotary recliner or a ratchet recliner or any other possible recliner mechanism. In particular, the recliner mechanism is configured as a wobble drive mechanism. A first lever pivot fitting PF3 connects the upper track 6.2 of the base structure 6 and thus to the floor F or to the track mechanism and the lever 7 by an articulated joint. A second lever pivot fitting PF4 connects the seat pan frame 5.1 and the lever 7 by an articulated joint.

Due to the pivot fittings PF1 to PF4, the seat pan 2, the backrest 3 and the leg rest 4 are articulated with respect to each other such that the seat 1 is positionable in the TTL position P1 shown in figure 1, the comfort position P2 shown in figure 2 and/or the sleeping position P3 shown in figure 3. The different positions P1 to P3 will be explained in more detail below.

The TTL position P1 of the seat 1 is a position in which the backrest 3 is in a substantial upright position with respect to the seat pan 2, the base structure 6 as well as to the floor F. A passenger needs to sit in an upright position. In more detail, the backrest 3 is in a position with an angle with respect to the vertical axis z, for example in an angle of about 3° to 12°. The leg rest 4 is in a position with an angle with respect to the vertical axis z, in particular in an angle of about 0° or less than 0°, e. g. in an angle of about - 3° to -10°. The levers 7 may be in a position with an angle with respect to the vertical axis z of about -45°.

In the comfort position P2 of the seat 1 illustrated in figure 2, the leg rest 4 has moved in an upward direction and the backrest 3 has moved in a downward direction considering that the seat 1 was moved from the TTL position P1 into the comfort position P2. Here, the leg rest 4, the seat pan 2 and the backrest 3 are respectively inclined to each other and the passenger is allowed to sit in a relaxed position. In more detail, the backrest 3 is in a position with an angle with respect to the vertical axis z of about more than 12° and less than 90°. The leg rest 4 is in a position with an angle with respect to the vertical axis z of about more than 0° and less than 85°. Further, the shoulder support 5.2.1 and/or the headrest frame 5.2.2 can be in a substantial inclined position with respect to the lower backrest frame 5.2.3. For example, the shoulder support 5.2.1 and/or the headrest frame 5.2.2 can be in a position with an angle with respect to the vertical axis z of about more than 3° and less than 35°.

The sleeping position P3 of the seat 1 is a position in which the backrest 3 and/or the leg rest 4 are in a substantial inclined position. In particular, the backrest 3 is in a position with an angle with respect to the vertical axis z of about 90°, in particular between 85° and 95°. The leg rest 4 is in a position with an angle with respect to the vertical axis z of about 45°, in particular between 40° and 50°. Further, the shoulder support 5.2.1 and/or the headrest frame 5.2.2 can be in a position with an angle with respect to the vertical axis z of about 90°, in particular between 85° and 95°.

The sleeping position of the seat 1 as illustrated in figure 3 is a position in which the backrest 3, the seat pan 2 and the leg rest 4 substantially are in a straight line, more over positioned in a horizontal plane. With other words: The backrest 3, the seat pan 2 and the leg rest 4 are substantially not inclined to each other and the passenger may be allowed to have a natural sleeping posture. The seat support structure 5 may be increasingly arranged with respect to the floor F from the leg rest 4 to the backrest 3. In more detail, the backrest 3 is in a position with an angle with respect to the vertical axis z of about 90°, in particular between 85° and 95°. The leg rest 4 is in a position with an angle with respect to the vertical axis z of about 45°, in particular between 40° and 50°. Further, the shoulder support 5.2.1 and/or the headrest frame 5.2.2 can be in a position with an angle with respect to the vertical axis z of about 90°, in particular between 85° and 95°.

The seat 1 is further provided with an upholstery 8 comprising a backrest upholstery part 8.1, a seat pan upholstery part 8.2 and a leg rest upholstery part 8.3. The backrest upholstery part 8.1 is provided to cover the backrest frame 5.2 and may comprise a head cushion 8.1.1 as illustrated in figure 1, which projects from the backrest upholstery part 8.1 into the direction of the longitudinal axis. The head cushion 8.1.1 and the backrest upholstery part 8.1 may be designed as one-piece or alternatively as separate components, wherein in the latter case the headrest cushion 8.1.1 may be glued to the backrest upholstery part 8.1.

Furthermore, the seat pan upholstery part 8.2 is provided to cover the seat pan frame 5.1. The leg rest upholstery part 8.3 is provided to cover the leg rest frame 5.3.

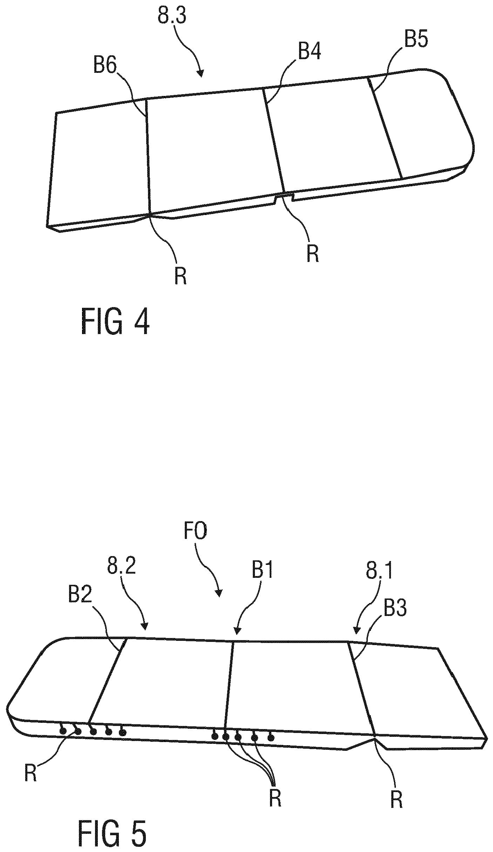

The backrest upholstery part 8.1, the seat pan upholstery part 8.2 and the leg rest upholstery part 8.3 may be designed from foam respectively, e. g. from polyurethane foam. The backrest upholstery part 8.1 and the seat pan upholstery part 8.2 may be designed as a one-piece foam element FO as it is exemplary illustrated in figure 5. The one-piece foam element FO extends from a headrest area of the backrest upholstery part 8.1 to a front end of the seat pan upholstery part 8.2, wherein the front end means an end of the seat pan upholstery part 8.2 that faces the leg rest 4.

As can be seen in more detail in figure 5, the one-piece foam element FO comprises a number of recesses R in a bending area B that is arranged between the seat pan upholstery part 8.2 and the backrest upholstery part 8.1. The recesses R may be configured as cavities or cut outs that may be inserted into a lower foam layer or milled from it and covered by a top foam layer as illustrated in figure 5. The foam top layer me be glued to the lower foam layer. The one-piece foam element FO may comprise further recesses R in further bending areas B2 and B3 that are configured as cutouts in a backside of the one-piece foam element FO, wherein the backside means a side of the one-piece foam element FO facing the seat support structure 5.

As can be seen in in more detail in figure 4, the leg rest upholstery part 8.3 comprises such recesses R as well. In particular, a cut-out is inserted into bending areas B4 to B6 of the leg rest upholstery part 8.3.

The recesses R are adapted to prepare softer areas within the foam parts of the upholstery 8 to make it easily bendable in these areas. Furthermore, the recesses R individually support different areas of a passenger's body, e. g. a hip and/or shoulder. For example, a passenger's spine may be in a neutral position while the passenger is lying on his back or on his side.

The leg rest upholstery part 8.3 may be attached to the one-piece foam element FO via a textile stripe that is sewed both to the one-piece foam element FO and the leg rest upholstery part 8.3. Alternatively, the backrest upholstery part 8.1, the seat pan upholstery part 8.2 and the leg rest upholstery part 8.3 may be designed as one-piece. A further alternative is to loosely connecting the leg rest upholstery part 8.3 to the one-piece foam element FO by a common arrangement of both the leg rest upholstery part 8.3 and the one-piece foam element FO within a trim cover 8.4. The trim cover 8.4 may be made from a fabric.

The upholstery 8 can be at least partially attached to the seat support structure 5 by not further shown force-fitted, adhesive and/or form-fitted connection points. In particular, the upholstery 8 can be attached to the seat support structure 5 via the trim cover 8.4 that may be attached at least to one of the seat pan frame 5.1 or the backrest frame 5.2. For example, the trim cover 8.4 is attached at least to one of the seat pan frame 5.1 or the backrest frame 5.2 via hook-and-loop fasteners. This enables an easy replacement of the trim cover 8.4 and thus the upholstery 8. As illustrated in figure 1, the trim cover 8.4 is further arranged over the headrest frame 5.2.2.

Moreover, the trim cover 8.4 is provided with at least one not shown connecting element that is provided in the bending area B1 of the one-piece foam element FO. Regarding the trim cover 8.4, this bending area B1 is defined between a trim cover part 8.4.1 covering the backrest upholstery part 8.1 and a further trim cover part 8.4.2 covering the seat pan upholstery part 8.2. The trim cover parts 8.4.1, 8.4.2 are inclined to each other when the seat 1 is moved into the TTL-position P1 in which the backrest 3 moves in the upward direction with respect to the seat pan 2. Usually, the trim cover 8.4 would be buckled due to this inclination.

The connecting element is provided to couple the trim cover 8.4 to a pull element 9 illustrated in figures 1 and 3 that prevents the trim cover 8.4 from buckling in the bending area B as it is explained in more detail below.

The at least one connecting element may be a band-shaped textile, e. g. a connecting stripe, that is sewed into the trim cover 8.4 in the section of the bending area B1. For example, the connecting element may be extend over an entire lateral extent of the trim cover 8.4, wherein the lateral extent runs parallel to the transverse axis. Alternatively, the connecting element extends only partially over the lateral extent of the trim cover 8.4.

In order to couple the trim cover 8.4 with the pull element 9, the connecting element may be provided with a zipper element. The pull element 9 is therefore provided with a corresponding zipper element in order to enable a zipper connection between the connecting element and the pull element 9. The pull element 9 and the connecting element can be alternatively coupled to each other via another suitable connection type that enables a detachable connection of the pull element 9. This allows replacement of the pull element 9 in an easy kind of way.

The pull element 9 is made from a flexible material, in particular from an elastic material such as an elastomer, rubber, textile or spring steel. The pull element 9 may be configured as an elastic band or as a spring steel wire. As mentioned before, the pull element 9 is coupled to the trim cover 8.4 via the connecting element. In particular, one end 9.1 of the pull element 9 is connected to the connecting element, e. g. via the zipper connection. Depending on a configuration of the connecting element, a section of the pull element 9 comprising the one end 9.1 extends entirely or partially over the lateral extent of the trim cover 8.4 in the bending area B1. Another end 9.2 of the pull element 9 is fixedly connected to the backrest frame 5.2 via a form fitting, force fitting or adhesive bonding. In particular, the pull element 9 may be detachable connected to the backrest frame 5.2 in order to enable easy replacement of the pull element 9. A section of the pull element 9 between the ends 9.1, 9.2 is guided about a circumference section of the backrest pivot fitting PF1. Thus, the pull element 9 is guided in a curvature around the backrest pivot axis PA1 with a larger radius. This effects that the pull element 9, in particular the one end 9.1 of the pull element 9, is biased and as a result is being pulled into the recess R of the one-piece foam element FO, i. e. in the direction of the backrest pivot axis PA1, when the backrest 3 is pivoted in the upward direction about the backrest pivot axis PA1 (with respect to the seat pan 2) in order to move the seat 1 into the taxi, take-off and landing position P1. A buckling of the trim cover 8.4 in the bending area B1 is prevented.

If the seat is moved from the TTL position P1 into the comfort position P2 or into the sleeping position P3, the pull element 9 relaxes due to the movement of the backrest 3 in the downward direction. The trim cover 8.4 is taken out of the recess R of the bending area B1. In the sleeping position P3, the pull element 9 is fully relaxed as can be seen in figure 3, whereby the pull element 9 is loosely arranged about the circumference of the backrest pivot fitting PF1. In order to prevent the pull element 9 from slipping down from the circumference of the backrest pivot fitting PF1, the circumference of the backrest pivot fitting PF1 may be provided with retaining elements (not shown).

**Figure 4** shows an exemplary embodiment of the leg rest upholstery part 8.3 in a perspective view.

**Figure 5** shows an exemplary embodiment of the one piece foam element FO comprising the backrest upholstery part 8.1 and the seat pan upholstery part 8.2.

As already mentioned before, the leg rest upholstery part 8.3 and the one-piece foam element FO comprises recesses R respectively in bending areas B1 to B6.

### LIST OF REFERENCES

- 1: seat
- 2: seat pan
- 3: backrest
- 4: leg rest
- 5: seat support structure
- 5.1: seat pan frame
- 5.2: backrest frame
- 5.2.1: shoulder support
- 5.2.2: headrest frame
- 5.2.3: lower backrest frame
- 5.3: leg rest frame
- 6: base structure
- 6.1: lower track
- 6.2: upper track
- 7: lever
- 8: upholstery
- 8.1: backrest upholstery part
- 8.1.1: headrest cushion
- 8.2: seat pan upholstery part
- 8.3: leg rest upholstery part
- 8.4: trim cover
- 8.4.1, 8.4.2: trim cover part
- 9: pull element
- 9.1,9.2: end
- x: longitudinal axis
- y: transverse axis
- z: vertical axis
- B1 to B6: bending area
- F: floor
- FO: one-piece foam element
- P1: taxi, take-off and landing position (TTL) position
- P2: comfort position
- P3: sleeping position
- PA1: backrest pivot axis
- PA2: leg rest pivot axis
- PA3: first lever pivot axis
- PA4: second lever pivot axis
- PA5: shoulder support pivot axis
- PF1: backrest pivot fitting
- PF2: leg rest pivot fitting
- PF3: first lever pivot fitting
- PF4: second lever pivot fitting
- R: recess

## Claims

1. A seat (1) for a vehicle, in particular for an airplane, comprising:
- a seat pan (2) having a seat pan frame (5.1),
- a backrest (3) having a backrest frame (5.2) which is pivotably mounted to a back seat pan side of the seat pan frame (5.1) at a backrest pivot fitting (PF1) having a backrest pivot axis (PA1),
- a leg rest (4) having a leg rest frame (5.3) which is pivotably mounted to a front seat pan side of the seat pan frame (5.1) at a leg rest pivot fitting (PF2) having a leg rest pivot axis (PA2),
wherein the seat pan (2), the backrest (3) and the leg rest (4) are articulated with respect to each other such that the seat (1) is positionable into at least one of a taxi, take-off and landing position (P1), a comfort position (P2) and a sleeping position (P3), wherein an upholstery (8) is provided that is arranged on the seat pan (2), the backrest (3) and the leg rest (4) and
wherein the upholstery (8) is configured to be pulled at least partially into the backrest pivot axis (PA1) between the seat pan (2) and the backrest (3) while pivoting the backrest (3) into an upward direction to move the seat (1) from the comfort position (P2) or the sleeping position (P3) into the taxi, take-off and landing position (P1).

2. The seat (1) according to claim 1, wherein a pull element (9) is provided for pulling the upholstery (8) at least partially into the backrest pivot axis (PA1).

3. The seat (1) according to claim 2, wherein the pull element (9) is configured as a flexible or non-flexible element.

4. The seat (1) according to claim 2 or 3, wherein the upholstery (8) comprises at least a seat pan upholstery part (8.2), a backrest upholstery part (8.1), a leg rest upholstery part (8.3) and a trim cover (8.4).

5. The seat (1) according to claim 4, wherein the trim cover (8.4) is configured to jointly cover the seat pan upholstery part (8.2), the backrest upholstery part (8.1) and the leg rest upholstery part (8.3).

6. The seat (1) according to claim 5, wherein the seat pan upholstery part (8.2) and the backrest upholstery part (8.1) are configured as a one-piece foam element (FO) to which the leg rest upholstery part (8.3) is detachably connectable.

7. The seat (1)0 according to any one of the claims 4 to 6, wherein the trim cover (8.4) is attached at least to one of the seat pan frame (5.1) or the backrest frame (5.2).

8. The seat (1) according to claim 7, wherein the trim cover (8.4) is attached at least to one of the seat pan frame (5.1) or the backrest frame (5.2) via hook-and-loop fasteners.

9. The seat (1) according to any one of the claims 4 to 8, wherein the trim cover (8.4) is provided with at least one connecting element in a bending area (B1) of the upholstery (8) located between a trim cover part (8.4.1) covering the backrest pan upholstery part (8.1) and a further trim cover part (8.4.2) covering the seat pan upholstery part (8.2).

10. The seat (1) according to claim 9, wherein the at least one connecting element is sewed into the trim cover (8.4) in a section of the bending area (B1).

11. The seat (1) according to claim 9 or 10, wherein one end (9.1) of the pull element (9) is connected to the trim cover (8.4) via the at least one connecting element.

12. The seat (1) according to claim 11, wherein the one end (9.1) of the pull element (9) is connected to the at least one connecting element via a zipper connection.

13. The seat (1) according to claim 11 or 12, wherein another end (9.2) of the pull element (9) is fixedly connected to the backrest frame (5.2).

14. The seat (1) according to any one of the claims 11 to 13, wherein the pull element (9) is guided about a circumference section of the backrest pivot fitting (PF1) such that at least the end (9.1) of the pull element (9) is pulled into the backrest pivot axis (PA1) by the backrest movement in the upward direction when the seat (1) is moved into the taxi, take-off and landing position (P1).

15. The seat (1) according to any one of the claims 4 to 14, wherein the upholstery (8) comprises at least one recess (R) arranged between the seat pan upholstery part (8.2) and the backrest upholstery part (8.1).
